# EUROPÄISCHE PATENTSCHRIFT

(11) **EP 3 210 912 B1**
(45) Veröffentlichungstag und Bekanntmachung des Hinweises auf die Patenterteilung: **02.01.2019**
(21) Anmeldenummer: 17157336.3
(22) Anmeldetag: 22.02.2017
(51) Int. Cl.: C05F 17/02, B65F 1/10, B65F 1/12, B65F 1/14, B65F 7/00

(54) **ENTSORGUNGSVORRICHTUNG**
DISPOSAL DEVICE
DISPOSITIF D'ÉVACUATION

(30) Priorität: 22.02.2016 DE 102016103078
(43) Veröffentlichungstag der Anmeldung: 30.08.2017
(73) Patentinhaber: Frese, Joel, 59964 Medebach-Titmaringhausen (DE)
(72) Erfinder: Frese, Joel, 59964 Medebach-Titmaringhausen (DE)
(74) Vertreter: Patentanwälte Olbricht Buchhold Keulertz

(56) Entgegenhaltungen:
- EP-A1- 2 284 105
- WO-A1-96/05154
- DE-C1- 19 524 629
- US-A- 5 568 996
- US-A1- 2011 101 137
- DATABASE WPI Week 201641 Thomson Scientific, London, GB; AN 2016-06177B XP002772069, -& CN 105 154 475 A (BEIJING CPCEP ENERGY CO LTD) 16. Dezember 2015 (2015-12-16)

## Beschreibung

Die Erfindung betrifft eine Entsorgungsvorrichtung gemäß dem Oberbegriff von Anspruch 1.

Organische Abfälle fallen beispielweise bei der Zubereitung von Speisen, bei Verderb durch Überlagerungen, Überproduktion von Mahlzeiten und in Form von Resten auf den einzelnen bereits an Konsumenten herausgegebenen Tellern an. Im Besonderen in Großküchen fallen vermehrt organische Abfälle an, die meistens in der Küche in verschieden Behältern gesammelt werden.

Für die Entsorgung dieser organischen Abfälle gibt es verschiedene Sammlungs- und Entsorgungsmethoden. Die bekannteste ist das Sammeln der Speisereste in 120 L oder 240 L Mülltonnen, die bis zur Abholung zur endgültigen Entsorgung häufig in gekühlten Behältnissen oder Räumen aufbewahrt werden. Je nach Abfallmenge erfolgt die Abholung täglich oder wöchentlich durch den Entsorgungsbetrieb. Die Küche bekommt bei der Abholung im Austausch bereits gereinigte und desinfizierte Tonnen zur erneuten Befüllung.

Bei dieser Art der Sammlung und Lagerung von organischen Abfällen kann es besonders im Sommer zu Geruchsbelästigungen und Keimbildung kommen. Des Weiteren ist die Küche auf eine gute Planung bei der Tonnenabholung und auf einen zuverlässigen Entsorger angewiesen.

Bei plötzlich ansteigenden Abfallmengen, beispielweise durch Veranstaltungen oder Feiertage, müssen mehr Lagerkapazitäten geschaffen werden, die zusätzlichen Platz und zusätzliche Kühlung benötigen. Eine solche Entsorgungsmethode ist daher aufwendig und unflexibel.

Zusätzlich erzeugt die regelmäßige Abholung der Mülltonnen hohe Lärm- und Emissionsbelästigungen durch die LKW-Abholfahrten. Die Reinigung und Desinfektion der Mülltonnen bedarf nicht nur einen hohen Personalaufwand, wodurch hohe Kosten anfallen, sondern auch Chemikalien, die kostenintensiv sind und die Umwelt belasten.

Zur Verminderung einer direkten Geruchsbelastung durch den Inhalt der Mülltonnen können beispielweise spezielle Einsätze, wie in DE 102 02 181 A1 beschrieben, verwendet werden. Dennoch müssen auch die Bauteile dieser Mülltonne aufwendig gereinigt und desinfiziert werden, was den Arbeits- und Logistikaufwand weiter erhöht. Zusätzlich ist im Besonderen bei hohen Temperaturen eine Kühlung vorzusehen, damit Geruchsbelastung und Keimbildung gehemmt werden.

DE 699 25 432 T2 beschreibt ein alternatives Speiseresteabfallsystem, wobei die eingegebenen Speisereste zuerst zerkleinert werden, um dann entwässert und verdichtet zu werden. Dadurch wird zwar weniger Platz für einen Sammelbehälter benötigt, allerdings ist der Platzbedarf für die Anordnung ebenfalls sehr hoch. Zusätzlich ist eine solche Anlage nicht nur teuer in der Anschaffung sondern führt auch zu hohen Energie- und Wartungskosten.

US 5 568 996 B offenbart ein System zur Aufbereitung und Lagerung von organischen Abfällen, wobei ein Lagertank mit einer Öffnung in der begrenzenden Wandung des Lagertanks vorgesehen ist, die mit einer Einfülleinheit verbunden ist, welche eine Einfüllöffnung aufweist. Die Anordnung umfasst zudem eine Walzanlage zur Zerkleinerung der Abfälle und Reduzierung des Abfallvolumens.

Eine Veröffentlichung in der Datenbank WPI, Week 201641, Thomson Scientific, London, GB und CN 105 154 475 A beschreiben ein Verfahren zur Verwertung von Küchenabfällen, die in einer Fermentationsanordnung zur Gewinnung von Biogas gelagert werden. Der Lagertank wird durch eine mit heißem Wasser beheizte Wandung begrenzt. Eine Einfülleinheit mit einer Einfüllöffnung ist mit dem Lagertank verbunden.

US 2011/101137 A zeigt ein Abfallverpackungssystem mit einem Schredder und einer Verpackungseinrichtung. Der Abfall gelangt von einer Einfüllöffnung über eine Einfülleinheit in einen Lagerbehälter, der versiegelbar und austauschbar ist. Im Bereich der Einfüllöffnung ist eine Wasserzugabeeinrichtung angeordnet, die Wasser zum Abfall mischt, um ein einfaches Zerkleinern und Homogenisieren des Abfalls zu ermöglichen.

WO 96/05154 A1 offenbart ein Verfahren zur Handhabung von organischen Abfällen sowie eine zugehörige Einrichtung. Diese umfasst einen Lagertank, der unterirdisch angeordnet ist und über eine trichterförmige Einfülleinheit mit einer Einfüllöffnung mit organischem Abfall befüllt werden kann.

Aus DE 195 24 629 C1 ist ein Entsorgungssystem für Bioabfall bekannt, mit einem Lagertank und einer Einwurfschleuse mit einem beweglichen Einwurfschacht und einer Reinigungsanlage für den Einwurfschacht. Dessen Einwurföffnung wird mit einer Klappe oder einem verschiebbaren Deckel verschlossen. Bedienelemente zum Verriegeln der Entsorgungsvorrichtung und Starten der Entsorgungsprozedur sind direkt neben der Einwurfklappe angeordnet.

EP 2 284 105 A1 offenbart einen Abfallbehälter mit einem ins Erdreich eingebetteten Lagertank. Die Wandungen des Lagertanks weisen keine Begrenzung nach oben auf, so dass der Lagertank nach oben offen ist. Im Lagertank ist ein weiterer, austauschbarer Abfallbehälter vorgesehen.

Aufgabe der Erfindung ist es daher, die bestehenden Nachteile des Stands der Technik zu überwinden und eine Entsorgungsvorrichtung für organische Abfälle bereitzustellen, die platzsparend, kostengünstig und umweltfreundlich ist sowie auf potentielle Mengenschwankungen der anfallenden organischen Abfälle flexibel ausgelegt werden kann. Zudem soll die Geruchsbelästigung und Keimbildung möglichst gering gehalten werden, ohne dass ein Einsatz von Chemikalien oder elektrischer Kühlung notwendig ist.

Hauptmerkmale der Erfindung sind im kennzeichnenden Teil von Anspruch 1 angegeben. Ausgestaltungen sind Gegenstand der Ansprüche 2 bis 9.

Bei einer Entsorgungsvorrichtung für organische Abfälle mit einem Lagertank, der eine Wandung, und mindestens eine Öffnung aufweist, wobei die Wandung den Lagertank nach außen begrenzt, und wobei die mindestens eine Öffnung in der Wandung angeordnet ist, und mit einer Einfülleinheit, wobei die Einfülleinheit eine Einfüllöffnung aufweist und mit der Öffnung in der Wandung des Lagertanks verbunden ist, und wobei die Wandung des Lagertanks zumindest abschnittsweise in eine thermische Masse eingebettet ist, dadurch gekennzeichnet, dass die Einfülleinheit, welche die Einfüllöffnung mit der Öffnung in der Wandung des Lagertanks verbindet, zumindest teilweise trichterförmig und in Entsorgungsrichtung zulaufend ausgebildet ist und einen Deckel aufweist, der die Einfüllöffnung nach außen verschließt, wobei der Deckel einen überlappenden Rand und/oder eine Dichtung aufweist, wobei die Einfülleinheit mit einer Wasserreinigungsvorrichtung versehen ist, die an einem unteren Ende des Trichters angeordnet ist und eine Düse zur Ausgabe und Verteilung von Wasser aufweist, wobei die Düse innerhalb der Einfülleinheit mündet und wobei die Wasserreinigungsvorrichtung eine Auslöseeinrichtung aufweist, welche als Kontaktplatte außen an der Einfülleinheit auf Kniehöhe und/oder Fußhöhe angeordnet ist oder als Bodenplatte ausgebildet ist.

Der erfindungsgemäße Aufbau ermöglicht das Einfüllen von organischen Abfällen in die durch die Einfüllöffnung in die Einfülleinheit, von welcher aus die Abfälle über die Öffnung direkt in den Lagertank gelangen. Dort tritt eine Vergärung der organischen Abfälle durch Bakterien auf, wodurch es zu einer hohen Geruchsbelastung kommen kann. Durch den erfindungsgemäßen Kontakt der Wandungen des Lagertanks mit einer thermischen Masse wird bei der Vergärung erzeugte Wärme, wie auch Wärme durch eingegebene organische Abfälle abgeleitet. Dieses bewirkt eine Kühlung des Lagertankinhalts, ohne dass eine zusätzlich elektrische Kühlung notwendig ist. Zusätzlich dazu bewirkt ein natürlicher Kühleffekt, dass die organischen Abfälle ausschließlich zu Kohlenstoffdioxid vergärt werden, welches als Schutzglocke die organischen Reste abdeckt. Dadurch wird sowohl eine Geruchsbelästigung durch aufsteigende, geruchsintensive Gase, als auch die Vermehrung von Keimen vermieden.

Die Entsorgungsvorrichtung ist sowohl in der Anschaffung, als auch im Betrieb kostengünstig, da beispielweise keine zusätzliche Kühleinrichtung benötigt wird. Weiterhin kann der Lagertank flexibel auf Mengenschwankungen an organischen Abfällen ausgelegt werden.

Weiterhin kann auf den Einsatz von Chemikalien zur Reinigung und Desinfektion nach einer Entleerung der Entsorgungsvorrichtung vollständig verzichtet werden, weil so das biologische Milieu im Lagertank aufrecht erhalten bleibt und eine Schutzglocke aus Kohlenstoffdioxid schneller erneuert wird.

Durch den Trichter können organische Abfälle möglichst komfortabel in die Entsorgungsvorrichtung eingefüllt werden. Die in Entsorgungsrichtung zulaufende Form des Trichters verhindert zum einen, dass große Gegenstände, wie beispielweise ein Abfalleimer, in den Lagertank fallen können, zum anderen kann gewährleistet werden, dass möglichst wenig Kohlenstoffdioxid, der Schutzschicht im Lagertank, aufgewirbelt wird. Der Trichter kann beispielweise einen quadratischen, viereckigen, achteckigen oder runden Querschnitt aufweisen.

Der Deckel verschließt die Entsorgungsvorrichtung temporär und kann nach Bedarf geöffnet werden. Hierfür kann der Deckel beispielweise manuell und/oder mit Hilfe eines Sensors automatisch geöffnet und geschlossen werden.

Der Deckel verschließt die Entsorgungsvorrichtung gegen äußere Umwelteinflüsse, zum Beispiel Starkregen oder Sturm, Eindringen von größeren artfremden Gegenständen, wie beispielweise Ästen oder Waschbären, und schützt somit die Kohlenstoffdioxid-Schutzschicht vor Verwirbelungen sowie den Lagertank vor Verunreinigungen. Zusätzlich werden potentielle Geruchsbelästigungen durch austretende geruchsintensive Gase weiter vermindert.

Indem der Deckel einen überlappenden Rand aufweist, der außen an einer Oberkante des Trichters anliegt, kann gewährleistet werden, dass der Deckel stets richtig aufliegt und die Einfülleinheit ausreichend verschlossen wird. Die Dichtung kann beispielweise in Form eines Dichtrings, der die Einfülleinheit und den Deckel zueinander abdichtet, vorgesehen sein. Durch diese Bauweise werden mögliche Luftverwirbelungen, beziehungsweise Kohlenstoffdioxidbewegungen, verhindert.

Die Wasserreinigungsvorrichtung ermöglicht die Reinigung eines Transportbehältnisses oder Abfalleimers, der zum Einbringen der organischen Abfälle benutzt wird. Dadurch gelangt dieser wieder sauber in die Küche. Zusätzlich dazu werden die organischen Abfälle im Lagertank flüssig und absaugfähig gehalten sowie ein Austrocknen verhindert.

Die Verwendung einer Düse zur Ausgabe und Verteilung des Wassers gewährleistet, dass das ausgegebene Wasser möglichst gut verteilt wird, wodurch geringere Wassermengen benötigt werden, was Kosten spart und die Umwelt schont. Zusätzlich kann die Düse gezielt eingestellt werden, so dass nur das Transportgefäß und/oder der Deckel abgespült werden, nicht aber die einfüllende Person. Wird der Deckel geschlossen kann auch dieser von der Wasserreinigungsvorrichtung innen ausgespült werden. Somit können eventuelle Anhaftungen von Abfällen entfernt werden. Weiterhin können auch die Innenwände der Einfülleinheit mit der Wasserreinigungsvorrichtung ausgespült und dadurch gereinigt werden.

Die Anordnung der Wasserreinigungsvorrichtung am unteren Ende des Trichters ermöglicht ein Ausspülen und Reinigen eines Transportbehältnisses oder Abfalleimers, der zum Einbringen der organischen Abfälle benutzt wurde, sowie des Deckels und der Innenwände der Einfülleinheit. Zusätzlich wird ein unkontrolliertes Austreten von Wasser vermieden.

Die Ausstattung der Wasserreinigungsvorrichtung mit einer Auslöseeinrichtung sorgt dafür, dass die Wasserabgabe durch die Wasserreinigungsvorrichtung kontrolliert werden kann. Eine bevorzugte Auslöseeinrichtung ist eine Kontaktplatte, die bevorzugt außen an der Einfülleinheit, beispielweise auf Kniehöhe und/oder Fußhöhe angeordnet ist. Optional ist die Auslöseeinrichtung als Bodenplatte ausgebildet. Wird die Auslöseeinrichtung berührt, beziehungsweise betätigt, tritt Wasser zur Reinigung aus der Wasserreinigungsvorrichtung aus. Ein Loslassen der Auslöseeinrichtung und/oder ein zweites Berühren oder Betätigen kann die Wasserabgabe der Wasserreinigungsvorrichtung stoppen. Die gute Erreichbarkeit der Auslöseeinrichtung ermöglicht eine benutzerfreundliche Betätigung und somit Reinigung des Transportgefäßes, des Deckels und/oder der Einfülleinheit. Eine Anordnung der Kontaktplatte auf Knie- und/oder Fußhöhe ermöglicht ein Betätigen der Wasserreinigungsvorrichtung ohne die Notwendigkeit einer freien Hand.

In einer bevorzugten Ausgestaltung ist vorgesehen, dass die Wandung des Lagertanks mindestens eine Seitenwand und/oder einen seitlichen Wandabschnitt aufweist, die beziehungsweise der zumindest abschnittsweise in eine thermische Masse eingebettet ist. Dadurch wird eine verbesserte Kühlung des Lagers und dessen Inhalts ermöglicht.

Vorzugsweise ist die Wandung des Lagertanks im Wesentlichen vollständig in die thermischen Masse eingebettet. Dabei ragen lediglich Bauteile der Entsorgungsvorrichtung, die von außen zugänglich sind, wie beispielweise die Einfüllöffnung der Einfülleinheit, aus der thermischen Masse heraus.

In einer bevorzugten Fortbildung ist vorgesehen, dass auf einer Außenseite der Wandung vorstehende Elemente ausgebildet sind, die mit der thermischen Masse in Kontakt stehen. Diese vergrößern den Kontaktbereich der Wandung mit der thermischen Masse und ein verbesserter Kühleffekt kann erzielt werden. Dabei ist es bevorzugt, dass die vorstehenden Elemente in Form von Rippen ausgebildet sind.

In einer bevorzugten Fortbildung steht die Einfülleinheit zumindest teilweise in Kontakt mit der thermischen Masse. Vorzugsweise stehen Seitenwände der Einfülleinheit zumindest teilweise in Kontakt mit der thermischen Masse. Dadurch werden eingefüllte organische Abfälle bereits in der Einfülleinheit gekühlt.

In einer bevorzugten Ausführungsform weist die thermische Masse Erdreich auf. Alternativ ist die thermische Masse Erdreich.

Als Erdreich werden dabei jegliche natürlich vorhandenen, umgelagerten oder eingebrachten Bodenmaterialien, wie beispielweise Mutterboden, Erde, Lehm, Kies, Sand, Gestein, Mineralien und/oder Felsen, eingeschlossen.

Die in Erdreich eingebettete Wandung und/oder Bereiche der Wandung des Lagertanks werden durch die umgebende, niedrige Bodentemperatur natürlich gekühlt. Bei den so erreichbaren Temperaturen im Lagertank entstehen durch Mikroorganismen organische Säuren, vorrangig Essigsäuren, die einen weiteren Abbauprozess der organischen Abfälle verhindern. Der pH-Wert sinkt auf 4 - 4,5 und es entsteht gleichzeitig Kohlenstoffdioxid, welches als Schutzglocke die organischen Reste abdeckt. Dadurch wird sowohl eine Geruchsbelästigung durch aufsteigende, geruchsintensive Gase vermieden, als auch die Vermehrung von Keimen und Kleinstlebewesen, wie Maden und Fliegen. Durch die natürliche Kühlung kann auf ein zusätzliches elektrisches Kühlsystem verzichtet werden, wodurch nicht nur Bereitstellungkosten, sondern auch die Betriebskosten deutlich gemindert werden.

In einer bevorzugten Ausgestaltung weist der Lagertank Verteilungselemente auf, die die organischen Abfälle innerhalb des Lagertanks verteilen. Werden organische Abfälle in die Einfülleinheit eingegeben, gelangen diese durch die Öffnung in den Lagertank. Damit sich die Abfälle nicht häufen und die Öffnung oder die Einfülleinheit verstopfen, sind Verteilungselemente vorgesehen. Diese ermöglichen eine möglichst gleichmäßige Verteilung der organischen Abfälle im Lagertank. Die Verteilungselemente sind bevorzugt schräge Bereiche der Wandung des Lagertanks. Alternativ können auch zusätzliche Verteilungselemente in Form von Schrägen in den Lagertank eingebracht sein.

Vorzugsweise ist die Öffnung in der Wandung an der Oberseite des Lagertanks angeordnet. Dadurch kann ein möglichst großes Volumen des Lagertanks für organische Abfälle verwendet werden. Für eine gleichmäßige Verteilung der organischen Abfälle im Lagertank ist eine mittige Anordnung der Öffnung in der Wandung an der Oberseite des Lagertanks bevorzugt.

In einer bevorzugten Fortbildung sind der Lagertank und/oder die Einfülleinheit außerhalb eines Gebäudes angeordnet. Bei dieser Bauweise müssen keine Räumlichkeit bereitgehalten werden, in denen die Entsorgungsvorrichtung angeordnet ist. Die erfindungsgemäße Entsorgungsvorrichtung ist dadurch besonders platzsparend und kostengünstig.

In einer bevorzugten Ausgestaltung kann der Deckel flach auf dem Trichter aufliegen, wobei der Deckel mindestens die Größe des Querschnitts des Trichters aufweisen sollte. In einer bevorzugten Ausgestaltung ist vorgesehen, dass der Deckel abschließbar gestaltet ist. Dieses kann beispielweise mit Hilfe eines Schlosses zwischen Trichter und Deckel erzielt werden. Diese Schutzvorrichtung verhindert, dass unbefugten Personen auf die Vorrichtung zugreifen können, oder auch Tiere, wie Waschbären, effektiv ferngehalten werden können.

In einer bevorzugten Fortbildung ist zwischen der Einfülleinheit und der Öffnung in der Wandung des Lagertanks ein Verbindungskanal angeordnet. Somit verbindet der Verbindungskanal beispielweise den Trichter mit dem Lagertank. Durch diese Konstruktion können sowohl kurze als auch längere baulich-bedingte Distanzen zwischen dem Einfüllort, an dem der Trichter sich befindet, und dem Lagertank überbrückt werden. Dieser Verbindungskanal kann sowohl direkt senkrecht, als auch gewinkelt oder kurvig verlaufen. Vorzugsweise ist vorgesehen, dass der Verbindungskanal eine Transportvorrichtung aufweist. Diese Transportvorrichtung kann beispielweise eine Exzenterschnecke, ein Förderband und/oder ein Rüttler sein. Mit Hilfe dieser Transportvorrichtung können die eingefüllten organischen Abfälle über Distanzen hinweg in den Lagertank transportiert werden.

Die Wasservorrichtung weist in einer bevorzugten Ausführungsform einen Frostschutz auf. Dieser Frostschutz ist beispielweise ein Heizschlauch, der um die Wasserreinigungsvorrichtung gewickelt ist. Sinkt die Temperatur unter 0°C, wird der Frostschutz bevorzugt automatisch, beispielweise durch eine Steuerung mit Temperatursensor, eingeschaltet. Steigt die Temperatur wieder an, erfolgt vorzugsweise eine automatische Abschaltung.

Alternativ sind auch andere Frostschutzmaßnahmen, wie eine Isolation oder konstante Beheizung der Wasserreinigungseinrichtung möglich.

In einer bevorzugten Ausführungsform weist die Auslöseeinrichtung einen Magnetschalter auf. Dieser Magnetschalter steuert die Wasserabgabe der Wasserreinigungsvorrichtung. Solange die Auslöseeinrichtung belastet wird, ist der Stromkreis geschlossen und die Wasserreinigungsvorrichtung ist aktiv. Wird die Auslöseeinrichtung nicht mehr belastet, ist die Wasserreinigungsvorrichtung deaktiviert. Dadurch kann eine kostengünstige Steuerung der Wasserreinigungsvorrichtung erreicht werden.

In einer alternativen Ausgestaltung ist vorgesehen, dass die Einfülleinheit eine Lichtschranke aufweist, die die Wasserreinigungsvorrichtung steuert. Werden organische Abfälle eingegeben, wird die Lichtschranke unterbrochen und die Wasserreinigungsvorrichtung automatisch beispielweise für einen bestimmten Zeitintervall aktiviert.

Optional kann vorgesehen sein, dass die Wasserreinigungsvorrichtung durch einen Sensor gesteuert wird. Dieser kann beispielsweise die Wasserreinigungsvorrichtung beim Öffnen des Deckels aktivieren. Wird der Deckel nach dem Einfüllen und dem Reinigen des Transportgefäßes wieder geschlossen, wird die Wasserreinigungsvorrichtung wieder gestoppt. Dabei kann beispielweise vorgesehen sein, dass die Wasserreinigungsvorrichtung erst nach einer bestimmten Zeit nach Schließen des Deckels gestoppt wird, wodurch der Deckel von innen ausgespült werden kann.

Diese alternativen Steuerungen der Wasserreinigungsvorrichtung ermöglichen, dass das Einfüllen für den Verbraucher möglichst angenehm ist und zusätzlich die Bauteile sauber gehalten werden sowie die organischen Abfälle verflüssigt werden. Auch wird durch diese Konstruktion die Vermehrung von Keimen sowie die Geruchsbelästigung möglichst gering gehalten.

In einer bevorzugten Fortbildung ist eine Versorgungseinheit vorgesehen, welche die Entsorgungsvorrichtungen mit notwendigen Medien versorgt. Notwendige Medien können beispielweise Wasser, Strom und/oder Wasser sein. In einer bevorzugten Ausgestaltung weist die Versorgungseinheit mindestens einen Wasseranschluss und/oder mindestens einen Stromanschluss aufweist, wobei der mindestens eine Wasseranschluss mit der Wasserreinigungsvorrichtung verbunden ist, und wobei der mindestens eine Stromanschluss der mit elektronischen Einheiten der Entsorgungsvorrichtung verbunden ist.

Der Wasseranschluss versorgt die Wasserreinigungsvorrichtung mit Wasser, dabei kann das eingespeiste Wasser sowohl kalt als auch warm sein. Das Vorsehen einer Versorgungseinheit ermöglicht die Versorgung der Wasserreinigungsvorrichtung mit Wasser sowie der elektronischen Einheiten mit Strom. Die elektronischen Einheiten können beispielweise der Frostschutz, die Auslöseeinrichtung zum Auslösen der Wasserreinigungsvorrichtung oder andere Steuerungseinheiten sein.

Die Versorgungseinheit und die Wasserreinigungsvorrichtung bilden bevorzugt eine vormontierte Baueinheit, die an der Einfülleinheit oder dem Lagertank montierbar ist. Die Versorgungseinheit ist bevorzugt außen an der Einfülleinheit angeordnet. Dieses ermöglicht eine einfache Montage und Wartung. Dabei ist es möglich, dass die Baueinheit direkt an der Einfülleinheit installiert ist oder aber auch über vorgesehene Anschlusspunkte nachgerüstet werden kann.

Vorzugsweise weist die Wandung des Lagertanks Glasfaser-verstärkten Kunststoff auf. Dieses ermöglicht eine kostengünstige Herstellung und Montage des Lagertanks. Zusätzlich ist dieses Material lange haltbar und gewährleistet, dass keine organischen Abfälle, Flüssigkeiten oder Zersetzungsreste unkontrolliert austreten.

In einer optionalen Ausgestaltung kann die Wandung des Lagertanks beispielweise Kunststoff, Metall oder Beton aufweisen. Vorzugsweise ist die Außenseite der Wandung mit einer wärmeleitenden Korrosionsschutzschicht beschichtet.

In einer Ausgestaltung weist der Lagertank ein Leervolumen von 1 bis 30 m3, bevorzugt ein Leervolumen von 4 bis 14 m3, besonders bevorzugt ein Leervolumen von 5 bis 10 m3 auf. Diese Tankgrößen ermöglichen eine ausreichende Lagerkapazität von organischen Abfällen, beispielweise aus Großküchen, so dass eine Abholung in möglichst großen, vertretbaren Abständen erfolgen kann. Zusätzlich ist eine Entleerung mit bekannten Abfallentsorgungsfahrzeugen möglich. Weiterhin bestimmt die Tankgröße auch die Stärke der Kohlenstoffdioxid-Schutzschicht, je mehr Freiraum über dem gelagerten organischen Abfall ist, desto mehr Kohlenstoffdioxid kann diesen abdecken und somit eine Geruchsbelästigung und Keimvermehrung vermindern und beseitigen. Zusätzlich kann die Lagertankgröße auch auf potentielle Mengenschwankungen, beispielweise durch Veranstaltungen, ausgelegt werden.

Der Lagertank weist vorzugsweise die Form einer Kugel und/oder eines Ellipsoids auf. Bei dieser Lagertankform können organische Abfälle am besten eingefüllt und gleichmäßig verteilt werden. Die Seitenwände weisen Schrägen auf, die eine gleichmäßige Verteilung fördern. Zusätzlich dazu wird bei dieser Tankform ein Aufwirbeln und Austreten von Kohlenstoffdioxid minimiert.

In einer alternativen Ausgestaltung kann vorgesehen sein, dass der Lagertank die Form eines Zylinders, Quaders, Würfels oder eines nicht-gleichmäßigen geometrischen Körpers aufweist. Dadurch kann eine optimale Anpassung an die räumlichen Gegebenheiten erfolgen und die Entsorgungsvorrichtung möglichst platzsparend eingebaut werden.

In einer bevorzugten Fortbildung der Erfindung ist vorgesehen, dass der Lagertank ein Absaugrohr aufweist. Dieses Absaugrohr dient der Entleerung des Lagertanks durch beispielweise ein Abpumpfahrzeug eines Serviceunternehmens.

Vorzugsweise reicht das Absaugrohr bis zum Boden des Lagertanks. Dadurch kann so viel wie möglich vom Inhalt beziehungsweise von den organischen Abfällen abgesaugt werden.

Allerdings muss der Lagertank nicht zusätzlich gespült oder mit chemischen Reinigungsmitteln desinfiziert werden, weil die natürlich vorhanden Bakterien und Mikroorganismen, die die biologische Masse zu Essigsäuren und Milchsäuren umwandeln und dadurch zeitgleich die Kohlenstoffdioxid-Schutzschicht aufbauen , erhalten bleiben dürfen. Durch das erhaltene biologische Milieu kann, beim weiteren Befüllen, schneller wieder eine Schutzschicht aufgebaut werden.

In einer bevorzugten Ausführungsform reicht das Absaugrohr mit einem freien Ende aus dem Lagertank. Dadurch ist es von außen erreichbar und der Lagertank kann entleert werden. Weiterhin ist bevorzugt, dass das Absaugrohr für Servicefahrzeuge gut erreichbar ist. Eine gute Erreichbarkeit ermöglicht ein schnelles Entleeren des Lagertanks, wodurch das Entleeren kostengünstig durchzuführen ist.

Das freie Ende des Absaugrohrs kann beispielweise gerade und/oder gebogen ausgebildet sein. Die bevorzugte Bauweise ist dabei von den baulichen Gegebenheiten am Installationsort abhängig.

In einer bevorzugten Fortbildung ist das freie Ende des Absaugrohrs mit einem Absaugrohrdeckel verschlossen. Durch den Absaugrohrdeckel ist das Absaugrohr gegenüber Eindringen von Gegenständen geschützt, die dieses verstopfen könnten. Zusätzlich wird auch hierdurch eine potentielle Geruchsbelästigung minimiert.

Der Absaugrohrdeckel kann vom Servicemitarbeiter zur Entleerung geöffnet werden. Dabei kann beispielweise eine Gewinde und Gegengewinde am Absaugrohr und Absaugrohrdeckel vorgesehen sein, welches den Absaugrohrdeckel mit dem Absaugrohr lösbar verschraubt.

Vorzugsweise kann vorgesehen sein, dass der Absaugrohrdeckel ein Schloss aufweist. Eine solche Sicherung ermöglicht, dass nur berechtigte Personen auf das Absaugrohr zugreifen können.

Vorzugsweise weist das Absaugrohr einen Durchmesser von 150 bis 400 mm, besonders bevorzugt einen Durchmesser von 180 bis 220 mm auf. Bei diesen Durchmessern kann gewährleistet werden, dass auch gröbere organische Abfälle abgesaugt werden und der Tank erfolgreich entleert werden kann.

Das Absaugrohr kann beispielweise aus Kunststoff, Stahl, Edelstahl oder Metall ausgebildet sein.

In einer bevorzugten Ausgestaltung der Erfindung ist eine Kontrolleinheit vorgesehen, die den Füllstand im Lagertank erfasst und daraus ein Füllstandssignal erzeugt. Vorzugsweise ist die Kontrolleinheit mit einer Anzeige verbunden, wobei die Anzeige das Füllstandssignal der Kontrolleinheit verarbeitet und den erfassten Füllstand anzeigt. Dabei wird der von der Kontrolleinheit erfasste Füllstand an die Anzeige übermittelt, die diesen darstellen kann. Eine Ermittlung und Kontrolle des Füllstands ermöglicht die Einhaltung eines optimalen Entleerungszyklus. Sobald ein bestimmter Füllstand an organischen Abfällen im Lagertank erreicht ist, kann ein Entleerungsservice beauftragt werden, diesen zu entleeren. Dadurch werden die Entleerungsfahrten und die Emissionsbelastung minimiert. Die Kontrolleinheit kann beispielweise über einen Sensor, eine Lichtschranke oder einen Schwimmkörper den Füllstand im Lagertank erfassen. Die Anzeige kann beispielweise als elektronische Anzeige oder manuelle Anzeige ausgebildet sein.

Bei Überschreiten eines festgelegten Füllstands im Lagertank wird bevorzugt ein Warnsignal ausgelöst. Dieses Warnsignal kann beispielweise optisch oder akustisch sein. So kann ein Überfüllen des Lagertanks vermieden werden und eine ausreichende Schutzschicht aus Kohlenstoffdioxid wird gewährleistet, wodurch eine Geruchsbelästigung minimiert wird. Auch werden maximal Entsorgungszyklen ermöglicht und somit Kosten und Emissionsbelastungen reduziert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine erfindungsgemäße Entsorgungsvorrichtung für organische Abfälle, die teilweise in eine thermische Masse eingebettet ist,
- Fig. 2: eine weitere Ausführungsform der erfindungsgemäßen Entsorgungsvorrichtung, im Wesentlichen vollständig in eine thermische Masse eingebettet ist,
- Fig. 3: eine Detailansicht einer Einfülleinheit für eine erfindungsgemäße Entsorgungseinrichtung mit einer Wasserreinigungsvorrichtung und einer Versorgungseinheit.

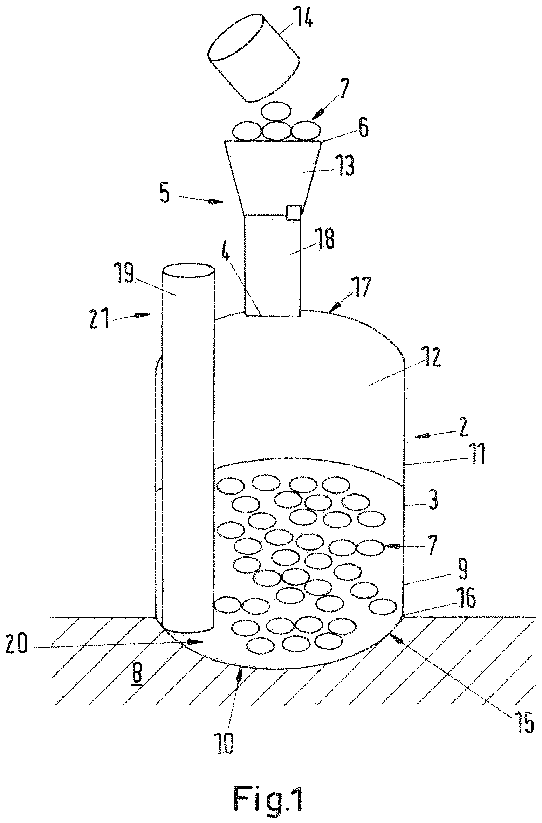

Figur 1 zeigt eine erfindungsgemäße Entsorgungsvorrichtung 1, welche einen Lagertank 2 mit einer Wandung 3 und einer Einfüllöffnung 4 aufweist. Die Wandung 3 begrenzt den Lagertank 2 nach außen. Die Öffnung 4, welche eine Unterbrechung in der Wandung 3 darstellt, ist mit einer Einfülleinheit 5 verbunden. Durch die Einfülleinheit 5, die eine Einfüllöffnung 6 aufweist, werden organische Abfälle 7 in die Entsorgungsvorrichtung 1 eingefüllt. Nach Eingabe in die Einfülleinheit 5 werden die organischen Abfälle 7 im Lagertank 2 gesammelt.

Die Wandung 3 ist zumindest abschnittsweise in eine thermische Masse 8 eingebettet. Hier im unteren Bereich des Lagertanks 2. Dabei weist eine Außenseite 9 der Wandung 3 des Lagertanks 2 eine Kontaktfläche 10 mit der thermischen Masse 8 auf.

In einer optionalen Ausgestaltung, die nicht dargestellt ist, kann eine Außenseite 9 der Wandung 3 mindestens einer Seitenwand 11 des Lagertanks zumindest abschnittsweise in die thermische Masse eingebettet ist.

Optional weist die thermische Masse 8 Erdreich auf. Als Erdreich werden dabei jegliche natürlich vorhandenen, umgelagerten oder eingebrachten Bodenmaterialien eingeschlossen.

Die durchschnittliche Bodentemperatur des Erdreichs beträgt je nach Außentemperatur etwa 12 °C ± 2 °C, wodurch der Inhalt es Lagertanks 2, die organischen Abfälle 7, auf circa 15 bis 20 °C gekühlt werden können. Diese Temperatur ist die optimale Temperatur bei der die entsprechenden Bakterien die organischen Abfälle 7 zu organischen Säuren, vorrangig Essigsäuren, umwandeln können. Die gebildeten Säuren verhindern einen weiteren Abbauprozess und senken den pH-Wert im Lagertank auf beispielweise 4 bis 4,5. Dabei entsteht zusätzlich Kohlenstoffdioxid, welches als Schutzschicht 12 über den organischen Abfällen 7 liegt. Aufgrund der Schutzschicht 12 aus Kohlenstoffdioxid kann kein Geruch nach außen dringen sowie keine Keime oder Bakterien gebildet werden, die einen aeroben Lebensraum benötigen. Auch andere aerobe Biologie, wie beispielweise Fliegen und Maden, kann durch die Kohlenstoffdioxid-Schutzschicht 12 nicht im Lagertank 2 überleben oder sich vermehren. Basierend auf der natürlichen Kühlung durch das umgebende Erdreich kann auf ein externes Kühlungssystem verzichtet werden.

Die Wandung 3 des Lagertanks 2 besteht beispielweise aus Glasfaser-verstärktem Kunststoff, welches ein Faser-Kunststoff-Verbund aus einem Kunststoff und Glasfasern ist. Als Basis kommen sowohl duroplastische Kunststoffe, wie beispielweise Polyesterharze oder Epoxidharze, als auch thermoplastische Kunststoffe (z. B. Polyamide) in Frage.

Die Einfülleinheit 5 ist bevorzugt in Form eines Trichters 13, nach unten verjüngend, geformt. Dieses ermöglicht das Einfüllen von organischen Abfällen 7 mit beispielweise einem Transportgefäß 14, ohne dass dieses, sollte es in den Trichter 13 fallen, in den Lagertank 2 gelangen kann. Mit Hilfe von optionalen Verteilungselementen 15, die hier beispielhaft in Form von schrägen Seitenwänden 16 dargestellt sind, kann erreicht werden, dass die eingefüllten organischen Abfälle 7 gleichmäßig im Lagertank 2 verteilt werden. Dadurch können sich die Abfälle 7 nicht häufen und die Einfüllöffnung 4 verstopfen.

Vorzugsweise ist die Einfüllöffnung 4 in der Wandung 3 an der Oberseite 17 des Lagertanks 2 angeordnet. Dadurch steht ein möglichst großes Volumen des Lagertanks 2 für organische Abfälle 7 zur Verfügung. Für eine gleichmäßige Verteilung der organischen Abfälle 7 im Lagertank 2 ist eine mittige Anordnung der Einfüllöffnung 4 in der Wandung 3 an der Oberseite 17 des Lagertanks 2 bevorzugt.

In einer optionalen Bauweise weist die Einfülleinheit 5, zwischen dem Trichter 13 und der Einfüllöffnung 4, einen Verbindungskanal 18 auf. Dieser kann, wie in Figur 1 gezeigt, senkrecht verlaufen, wodurch zum Beispiel die Einfüllhöhe der Einfülleinheit 5 je nach baulichen Gegebenheiten variiert werden kann. Alternativ können mit Hilfe des Verbindungskanals 18 auch weitere Distanzen überbrückt werden.

In einer Ausführungsform weist der Lagertank 2 ein Absaugrohr 19 auf. Mit Hilfe dieses Absaugrohrs 19 kann der Lagertank 2 durch beispielweise ein Abpumpfahrzeug eines Serviceunternehmens entleert werden.

Das Absaugrohr 19 reicht bis zum Boden 20 des Lagertanks, damit so viel wie möglich von den organischen Abfällen 7 abgesaugt werden kann. Das Absaugrohr 19 reicht mit einem freien Ende 21 oberirdisch aus dem Lagertank 2. Dieses ermöglicht eine gute Erreichbarkeit des Absaugrohrs 19 für Servicefahrzeuge.

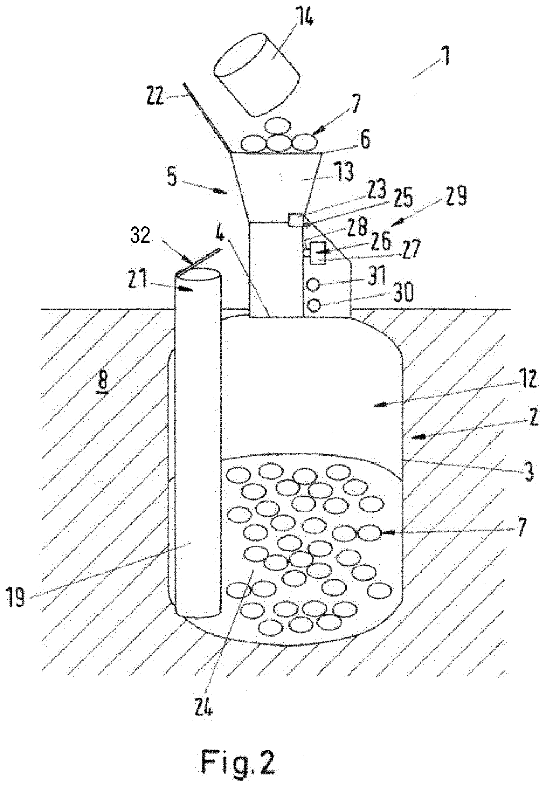

In Fig. 2 ist eine weitere Ausführungsform der Entsorgungsvorrichtung 1 gezeigt. Der Lagertank 2 ist im Wesentlichen vollständig von thermischer Masse 8 umgeben und steht mit seiner Wandung 3 in direktem Kontakt damit. Lediglich Bauteile oder zumindest Teile davon, die von außen zugänglich sein sollten, wie beispielweise die Einfülleinheit 5 und das Absaugrohr 19, ragen aus der thermischen Masse 8.

Zusätzlich verhindern die Bedingungen aus niedriger Temperatur und saurem pH-Wert einen weiteren Abbau des organischen Materials 7, beziehungsweise der organischen Säuren, so dass im Lagertank 2 kein Methan gebildet wird.

Die Einfülleinheit 5 kann mit einem Deckel 22 temporär nach außen verschlossen werden. Dabei liegt der Deckel 22 auf der Einfüllöffnung 6 auf und verschließt die Entsorgungsvorrichtung 1 gegen äußere Umwelteinflüsse und schützt die Kohlenstoffdioxid-Schutzschicht 12 vor Verwirbelungen sowie den Lagertank 2 vor Verunreinigungen. Auch wird ein möglicher unangenehmer Geruch weiter reduziert.

Die Einfülleinheit 5 weist optional eine innerhalb der Einfülleinheit 5 angeordnete Wasserreinigungsvorrichtung 23 auf, die bevorzugt eine Düse zur Ausgabe und Verteilung von Wasser aufweist. Sie kann mit kaltem und/oder warmem Wasser betrieben werden. Die Wasserreinigungsvorrichtung 23 mit der Düse ermöglicht die Reinigung eines Transportbehältnisses 14, das zum Einbringen der organischen Abfälle 7 benutzt wird. Neben der Reinigung des Transportbehältnisses 14 sowie der Innenflächen der Einfülleinheit 5, werden auch die organischen Abfälle 7 im Lagertank 2 vor Austrocknen geschützt und möglichst flüssig gehalten. Im Lagertank 2 entsteht also eine Mischung 24 aus organischen Abfällen 7, Wasser und teilweise abgebauten Resten, die von einem Abpumpfahrzeug abgesaugt werden können.

Um in Gebieten mit Temperaturen unter 0°C auch die Funktionsweise der Wasserreinigungsvorrichtung 23 durchgängig zu ermöglich, kann ein Frostschutz 25 vorgesehen sein. Dieser Frostschutz 25 kann beispielweise ein Heizschlauch sein, der um die Wasserreinigungsvorrichtung 23 gewickelt ist.

Die Wasserreinigungsvorrichtung 23 wird durch eine Auslöseeinrichtung 26 gesteuert. Dieses kann beispielweise eine Kontaktplatte 27 auf Kniehöhe sein. Wird die Kontaktplatte 27 berührt, beziehungsweise betätigt, tritt Wasser zur Reinigung aus der Düse der Wasserreinigungsvorrichtung 23 aus. Ein Loslassen der Kontaktplatte 27 oder ein zweites Berühren oder Betätigen kann die Wasserabgabe der Wasserreinigungsvorrichtung 23 stoppen. Diese Kontaktplatte 27 kann mit Hilfe eines Magnetschalters 28 die Wasserabgabe der Wasserreinigungsvorrichtung 23 steuern. Dieser Magnetschalter 28 ist direkt hinter der Kontaktplatte 27 angeordnet. Solange die Kontaktplatte 27 belastet wird, ist der Stromkreis des Magnetschalters 28 geschlossen und die Wasserreinigungsvorrichtung 23 ist aktiv. Wird die Kontaktplatte nicht mehr belastet, ist die Wasserreinigungsvorrichtung 23 deaktiviert.

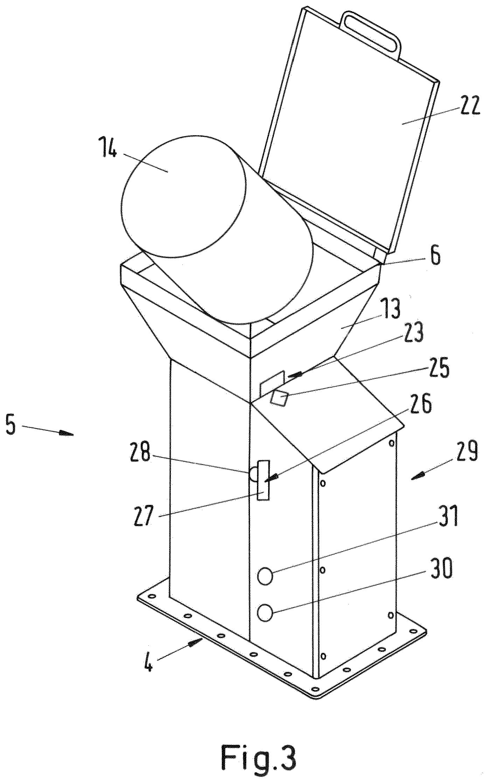

Eine optional vorgesehene Versorgungseinheit 29, versorgt die Entsorgungsvorrichtung 1 mit notwendigen Medien, beispielweise Wasser und/oder Strom. Dabei weist diese Versorgungseinheit 29 mindestens einen Strom- 30 und/oder einen Wasseranschluss 31 auf. Die in Fig. 2 dargestellte Anordnungen der Anschlüsse 30 und 31 sind lediglich beispielhaft. Die Versorgungseinheit kann direkt neben der Einfülleinheit angeordnet werden, aber gegebenenfalls auch nachgerüstet werden. Eine Detailansicht einer möglichen Einfülleinheit 5 mit Versorgungseinheit 29 ist in Fig. 3 gezeigt.

Der Wasseranschluss 31 versorgt die Wasserreinigungsvorrichtung 23 mit Wasser, wobei das eingespeiste Wasser je nach Kundenwunsch sowohl kalt als auch warm sein kann. Das Vorsehen eines Stromanschlusses 30 ermöglicht die Versorgung der elektronischen Einheiten mit Strom. Die elektronischen Einheiten können beispielweise der Frostschutz 25, die Auslöseeinrichtung 26 zum Auslösen der Wasserreinigungsvorrichtung 23 oder andere Steuerungseinheiten sein.

Wie in Fig. 2 dargestellt kann das Absaugrohr 19 mit einem Absaugrohrdeckel 32 temporär verschlossen sein. Dieses dichtet die Entsorgungsvorrichtung 1 nach außen gegen Geruchsbelästigungen ab und schützt sie vor externen negativen Einflüssen.

## Patentansprüche

1. Entsorgungsvorrichtung (1) für organische Abfälle (7) mit einem Lagertank (2), der eine Wandung (3) und mindestens eine Öffnung (4) aufweist, wobei die Wandung (3) den Lagertank (2) nach außen begrenzt, und wobei die mindestens eine Öffnung (4) in der Wandung (3) angeordnet ist, und mit einer Einfülleinheit (5), wobei die Einfülleinheit (5) eine Einfüllöffnung (6) aufweist und mit der Öffnung (4) in der Wandung (3) des Lagertanks (2) verbunden ist, die Wandung (3) des Lagertanks (2) zumindest abschnittsweise in eine thermische Masse (8), die Erdreich ist oder aufweist, eingebettet ist, **dadurch gekennzeichnet**,
▪ dass die Einfülleinheit (5), welche die Einfüllöffnung (6) mit der Öffnung (4) in der Wandung (3) des Lagertanks (2) verbindet, zumindest teilweise trichterförmig und in Entsorgungsrichtung zulaufend ausgebildet ist und einen Deckel (22) aufweist, der die Einfüllöffnung (6) nach außen verschließt,
▪ wobei der Deckel einen überlappenden Rand und/oder eine Dichtung aufweist,
▪ wobei die Einfülleinheit (5) mit einer Wasserreinigungsvorrichtung (23) versehen ist, die an einem unteren Ende des Trichters angeordnet ist und eine Düse zur Ausgabe und Verteilung von Wasser aufweist,
▪ wobei die Düse innerhalb der Einfülleinheit (5) mündet und
▪ wobei die Wasserreinigungsvorrichtung (23) eine Auslöseeinrichtung (26) aufweist, welche als Kontaktplatte (27) außen an der Einfülleinheit (5) auf Kniehöhe und/oder Fußhöhe angeordnet ist oder als Bodenplatte ausgebildet ist.

2. Entsorgungsvorrichtung (1) nach Anspruch 1, **dadurch gekennzeichnet, dass** die Wandung (3) des Lagertanks (2) mindestens eine Seitenwand (11) und/oder einen seitlichen Wandabschnitt aufweist, die zumindest abschnittsweise in die thermische Masse (8) eingebettet ist.

3. Entsorgungsvorrichtung (1) nach einem der vorangegangenen Ansprüche, **dadurch gekennzeichnet, dass** die Wandung (3) des Lagertanks (2) im Wesentlichen vollständig in die thermische Masse (8) eingebettet ist.

4. Entsorgungsvorrichtung (1) nach einem der vorangegangenen Ansprüche, **dadurch gekennzeichnet, dass** zwischen der Einfülleinheit (5) und der Öffnung (4) in der Wandung (3) des Lagertanks (2) ein Verbindungskanal (18) angeordnet ist.

5. Entsorgungsvorrichtung (1) nach Anspruch 1, **dadurch gekennzeichnet, dass** die Wasserreinigungsvorrichtung (23) einen Frostschutz (25) aufweist.

6. Entsorgungsvorrichtung (1) nach einem der vorangegangenen Ansprüche, **dadurch gekennzeichnet, dass** eine Versorgungseinheit (29) vorgesehen ist, welche die Entsorgungsvorrichtung (1) mit notwendigen Medien versorgt.

7. Entsorgungsvorrichtung (1) nach einem der Ansprüche 1 oder 5 oder 6, **dadurch gekennzeichnet, dass** die Wasserreinigungsvorrichtung (23) und die Versorgungseinheit (29) eine vormontierte Baueinheit bilden, die an der Einfülleinheit (5) oder dem Lagertank (2) montierbar ist.

8. Entsorgungsvorrichtung (1) nach einem der vorangegangenen Ansprüche, **dadurch gekennzeichnet, dass** der Lagertank (2) ein Absaugrohr (19) aufweist, wobei das Absaugrohr (19) bis zu einem Boden (20) des Lagertanks (2) reicht und ein freies Ende (21) aufweist, welches aus dem Lagertank (2) ragt und mit einem Absaugrohrdeckel (32) verschlossen ist.

9. Entsorgungsvorrichtung (1) nach einem der vorangegangenen Ansprüche, **dadurch gekennzeichnet, dass** eine Kontrolleinheit vorgesehen ist, die den Füllstand im Lagertank (2) erfasst und daraus ein Füllstandssignal erzeugt, und mit einer Anzeige verbunden ist, wobei die Anzeige das Füllstandssignal der Kontrolleinheit anzeigt.

## Claims

1. Disposal device (1) for organic waste (7) with a storage tank (2), which has one wall (3) and at least one opening (4), wherein the wall (3) delimits the storage tank (2) to the exterior, and wherein the at least one opening (4) is disposed in the wall (3), and with one filling unit (5), wherein the filling unit (5) has a filling opening (6) and is connected with the opening (4) in the wall (3) of the storage tank (2), the wall (3) of the storage tank (2) is embedded at least sectionally in a thermal mass (8), which is or has soil, **characterised in that**
- the filling unit (5), which connects the filling opening (6) with the opening (4) in the wall (3) of the storage tank (2), is formed at least partially the form of a funnel and tapering in disposal direction and has a lid (22) which closes the filling opening (6) to the exterior,
- wherein the lid has an overlapping edge and/or a seal,
- wherein the filling unit (5) is furnished with a water purifying device (23), which is disposed at a lower end of the funnel and has a nozzle for the output and distribution of water,
- wherein the nozzle opens within the filling unit (5) and
- wherein the water purifying device (23) has a release device (26) which is formed as contact plate (27) on the exterior of the filling unit (5) at the height and/or foot height or is formed as floor plate.

2. Disposal device (1) according to claim 1, **characterised in that** the wall (3) of the storage tank (2) has at least one side wall (11) and/or a wall section at the side, which is embedded at least sectionally in the thermal mass (8).

3. Disposal device (1) according to one of the preceding claims, **characterised in that** the wall (3) of the storage tank (2) is embedded substantially completely in the thermal mass (8).

4. Disposal device (1) according to one of the preceding claims, **characterised in that** between the filling unit (5) and the opening (4) in the wall (3) of the storage tank (2) is disposed a connecting channel (18).

5. Disposal device (1) according to claim 1, **characterised in that** the water purifying device (23) has a frost protection (25).

6. Disposal device (1) according to one of the preceding claims, **characterised in that** a supply unit (29) is provided, which supplies the disposal device (1) with necessary media.

7. Disposal device (1) according to one of claims 1 or 5 or 6, **characterised in that** the water purifying device (23) and the supply unit (29) form a premounted construction unit, which can be mounted at the filling unit (5) or the storage tank (2).

8. Disposal device (1) according to one of the preceding claims, **characterised in that** the storage tank (2) has an extraction pipe (19), wherein the extraction pipe (19) reaches to a floor (20) of the storage tank (2) and has a free end (21) which protrudes out of the storage tank (2) and is closed with an extraction pipe lid (32).

9. Disposal device (1) according to one of the preceding claims, **characterised in that** a control unit is provided which detects the fill level in the storage tank (2) and generates therefrom a fill level signal, and is connected with a display, wherein the display shows the fill level signal of the control unit.

## Revendications

1. Dispositif d'élimination (1) pour des déchets organiques (7) avec un réservoir de stockage (2) qui présente une paroi (3) et au moins une ouverture (4), dans lequel la paroi (3) délimite vers l'extérieur le réservoir de stockage (2), et dans lequel l'au moins une ouverture (4) est agencée dans la paroi (3), et avec une unité de remplissage (5), dans lequel l'unité de remplissage (5) présente une ouverture de remplissage (6) et est raccordée à l'ouverture (4) dans la paroi (3) du réservoir de stockage (2), la paroi (3) du réservoir de stockage (2) est intégrée au moins par sections dans une masse thermique (8) qui est ou présente de la terre, **caractérisé en ce**
- **que** l'unité de remplissage (5) qui raccorde l'ouverture de remplissage (6) à l'ouverture (4) dans la paroi (3) du réservoir de stockage (2), est réalisée au moins partiellement en forme d'entonnoir et s'effilant dans le sens d'élimination et présente un couvercle (22) qui ferme vers l'extérieur l'ouverture de remplissage (6),
- dans lequel le couvercle présente un bord chevauchant et/ou une garniture,
- dans lequel l'unité de remplissage (5) est pourvue d'un dispositif de nettoyage d'eau (23) qui est agencé à une extrémité inférieure de l'entonnoir et présente une buse pour la sortie et la distribution d'eau,
- dans lequel la buse débouche dans l'unité de remplissage (5) et
- dans lequel le dispositif de nettoyage d'eau (23) présente un dispositif de déclenchement (26) qui est agencé en tant que plaque de contact (27) à l'extérieur sur l'unité de remplissage (5) à hauteur de genou et/ou à hauteur de pied ou est réalisé en tant que plaque de sol.

2. Dispositif d'élimination (1) selon la revendication 1, **caractérisé en ce que** la paroi (3) du réservoir de stockage (2) comporte au moins une paroi latérale (11) et/ou une section de paroi latérale qui est au moins partiellement noyée dans la masse thermique (8).

3. Dispositif d'élimination (1) selon l'une quelconque des revendications précédentes, **caractérisé en ce que** la paroi (3) du réservoir de stockage (2) est intégrée sensiblement complètement dans la masse thermique (8).

4. Dispositif d'élimination (1) selon l'une quelconque des revendications précédentes, **caractérisé en ce qu**'un canal de raccordement (18) est agencé entre l'unité de remplissage (5) et l'ouverture (4) dans la paroi (3) du réservoir de stockage (2).

5. Dispositif d'élimination (1) selon la revendication 1, **caractérisé en ce que** le dispositif de nettoyage d'eau (23) présente une protection contre le gel (25).

6. Dispositif d'élimination (1) selon l'une quelconque des revendications précédentes, **caractérisé en ce qu**'une unité d'alimentation (29) est prévue, laquelle alimente en milieux nécessaires le dispositif d'élimination (1).

7. Dispositif d'élimination (1) selon l'une quelconque des revendications 1 ou 5 ou 6, **caractérisé en ce que** le dispositif de nettoyage d'eau (23) et l'unité d'alimentation (29) forment une unité de construction prémontée, qui peut être montée sur l'unité de remplissage (5) ou le réservoir de stockage (2).

8. Dispositif d'élimination (1) selon l'une quelconque des revendications précédentes, **caractérisé en ce que** le réservoir de stockage (2) présente un tube d'aspiration (19), dans lequel le tube d'aspiration (19) atteint un fond (20) du réservoir de stockage (2) et présente une extrémité libre (21) qui dépasse du réservoir de stockage (2) et est fermée avec un couvercle de tube d'aspiration (32).

9. Dispositif d'élimination (1) selon l'une quelconque des revendications précédentes, **caractérisé en ce qu**'une unité de commande est prévue, laquelle détecte le niveau de remplissage dans le réservoir de stockage (2) et génère à partir de celui-ci un signal de niveau de remplissage et est raccordée à un affichage, dans lequel l'affichage affiche le signal de niveau de remplissage de l'unité de commande.
